# EUROPEAN PATENT APPLICATION

(11) **EP 4 542 382 A1**
(43) Date of publication of application: **23.04.2025**
(21) Application number: 23829745.1
(22) Date of filing: 12.05.2023
(51) Int. Cl.: G06F 9/48

(54) **SERVICE SCHEDULING METHOD, ELECTRONIC DEVICE AND STORAGE MEDIUM**

(30) Priority: 28.06.2022 CN 202210740419
(71) Applicant: ZTE Corporation, Shenzhen, Guangdong 518057 (CN)
(72) Inventor: YANG, Song, Shenzhen, Guangdong 518057 (CN)
(74) Representative: WBH Wachenhausen Patentanwälte PartG mbB
(86) International application number: PCT/CN2023/093894
(87) International publication number: WO 2024/001559

(57) **Abstract**

The present application discloses a service scheduling method, an electronic device and a computer-readable storage medium. The service scheduling method comprises: performing screening processing on a first Pod sequence to obtain a second Pod sequence, wherein the screening processing comprises: traversing Pods in the first Pod sequence, and for each Pod in the first Pod sequence, when it is determined according to affinity configuration information in service association configuration information that all affinity Pods corresponding to the Pod are present in the first Pod sequence, combining the Pod and all the affinity Pods to obtain a transition Pod (S110); and performing node deployment on a target Pod in the second Pod sequence, wherein the node deployment comprises: when the target Pod is determined to be a transition Pod, deploying all Pods, which are combined to obtain the target Pod, at the same target node (S120).

## Description

### CROSS-REFERENCE TO RELATED APPLICATION

This application is filed on the basis of Chinese patent application No. 202210740419.5 filed June 28, 2022, and claims priority to the Chinese patent application, the entire contents of which are incorporated herein by reference.

### TECHNICAL FIELD

The present disclosure relates to the technical field of cloud native, and in particular, to a service scheduling method, an electronic device, and a computer-readable storage medium.

### BACKGROUND

In a cloud computing system based on a Kubernetes architecture, each service network element migrates a Cloud Native Network Functions (CNF) service to Kubernetes to realize containerized applications of the CNF service. To realize the containerized applications of the CNF service, multiple Pods included in the CNF service need to be scheduled. At present, methods involving Pod scheduling already exist in the industry. Although Pod scheduling can basically be realized, node deployment requires massively modifying service blueprints of Pods in some special scenarios, which will increase the complexity of the service blueprints of Pods, leading to certain risks associated with these modifications.

### SUMMARY

The following is a summary of the subject matter set forth in the present disclosure. This summary is not intended to limit the scope of protection of the claims.

Embodiments of the present disclosure provide a service scheduling method, an electronic device, and a computer-readable storage medium.

In accordance with a first aspect of the present disclosure, an embodiment provides a service scheduling method, including: performing screening processing on a first Pod sequence to obtain a second Pod sequence, in response to acquiring service association configuration information, where the screening processing includes: traversing Pods in the first Pod sequence, and for each Pod in the first Pod sequence, in response to determining according to affinity configuration information in the service association configuration information that all affinity Pods corresponding to the Pod are present in the first Pod sequence, combining the Pod and all the affinity Pods to obtain a transition Pod, where the affinity configuration information is used for representing a service binding relationship between different Pods in the first Pod sequence, and the affinity Pods are the Pods having a service binding relationship with the Pod; performing node deployment for a target Pod in the second Pod sequence, where the node deployment includes: in response to determining that the target Pod is the transition Pod, deploying all the Pods, which are combined to obtain the target Pod, at the same target node, where the target Pod is the Pod to be deployed in the second Pod sequence.

In accordance with a second aspect of the present disclosure, an embodiment provides an electronic device, including: at least one processor; and at least one memory, configured for storing at least one program, where the at least one program, when executed by the at least one processor, causes the at least one processor to implement the service scheduling method described above.

In accordance with a third aspect of the present disclosure, an embodiment provides a computer-readable storage medium, storing a processor-executable program which, when executed by a processor, causes the processor to implement the service scheduling method described above.

Additional features and advantages of the present disclosure will be set forth in the description which follows, and in part will be obvious from the description, or may be learned by the practice of the present disclosure. The objectives and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is an execution flowchart of a node scheduler in the related technology;
FIG. 2 is a flowchart of a service scheduling method according to an embodiment of the present disclosure;
FIG. 3 is a schematic diagram of affinity configuration information according to an embodiment of the present disclosure;
FIG. 4 is a schematic diagram of mutual exclusion configuration information according to an embodiment of the present disclosure;
FIG. 5 is a flowchart of performing screening processing on a first Pod sequence to obtain a second Pod sequence in a service scheduling method according to an embodiment of the present disclosure;
FIG. 6 is a flowchart of sorting all Pods in an initial Pod set to obtain the first Pod sequence in a service scheduling method according to another embodiment of the present disclosure;
FIG. 7 is an execution flowchart of a service scheduling method according to an embodiment of the present disclosure; and
FIG. 8 is a schematic diagram of an electronic device according to an embodiment of the present disclosure.

### DETAILED DESCRIPTION

To make the objectives, technical schemes, and advantages of the present disclosure clear, the present disclosure is described in further detail in conjunction with the accompanying drawings and embodiments. It should be understood that the specific embodiments described herein are merely used for illustrating the present disclosure, and are not intended to limit the present disclosure.

It should be noted that although logical orders have been shown in the flowcharts, in some cases, the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the cloud native field, Kubernetes is widely used as an industry-wide Platform as a Service (PaaS) application platform. Each service network element migrates its service to Kubemetes to realize containerized applications of the service. Pod is the smallest unit for scheduling in Kubernetes. A CNF service includes multiple Pods, which are divided into two categories: core service Pods and basic service Pods. The core service Pods are related Pods for realizing a core service of the CNF, which are generally strongly associated with a specific service of a service network element and have strong particularity. The basic service Pods are Pods that are not closely associated with the core service of the CNF and are highly transplantable between different service network elements, such as database services, network transmission services, file services, etc.

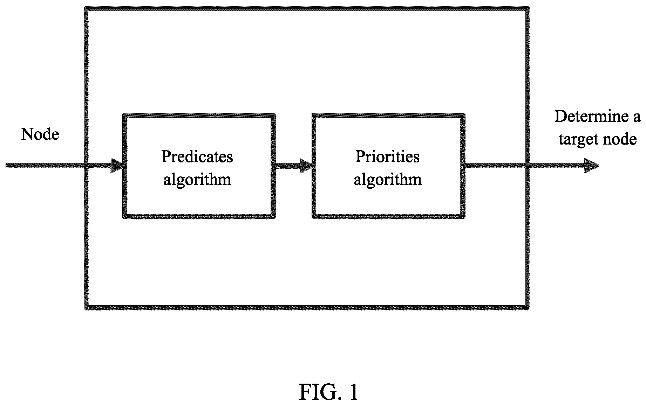

FIG. 1 is an execution flowchart of a node scheduler in the related technology. In Kubernetes, a node to which a Pod is finally deployed needs to be determined through an operation performed by a node scheduler in the related technology. The node scheduler in the related technology generally uses a Predicates algorithm and a Priorities algorithm to screen nodes to finally determine the node for deploying the Pod. The Predicates algorithm mainly performs filtering to determine nodes that meet a Pod resource requirement, and the Priorities algorithm scores each of the nodes according to a current resource status while satisfying the resource requirements. The node with the highest score is the node for deploying the Pod.

However, as services of CNF service network elements differ greatly, in some cases, the calculation result of the node scheduler in the related technology cannot meet the requirements of the service network elements well. For example, two Pods of a CNF service have a service binding relationship in terms of service, and the two Pods need to be deployed on the same node. If no special binding modification is made to service blueprints of the two Pods, the deployment of the two Pods cannot meet the service binding requirement because the node scheduler in the related technology considers only resource-level requirements of the two Pods and does not consider the service binding relationship between the Pods.

To solve such problems, a conventional approach is to add some correlation configurations, such as matching tags, to the service blueprints of the Pods. However, this approach leads to high complexity of the service blueprints of the Pods, and once the service binding relationship between Pods changes, the service blueprints of the corresponding Pods need to be modified. This approach is feasible in scenarios with a small number of Pods. However, when the number of Pods continues to increase, frequently modifying the service blueprints of the Pods will bring huge workload, which is not an optimal scheme to the problem, or even is an infeasible scheme.

To solve the above problems, the present disclosure provides a service scheduling method, an electronic device, and a computer-readable storage medium. The service scheduling method mainly includes a sorting stage, a pre-filter stage, and a post-scoring stage.

The sorting stage is performed mainly from the aspects of a service affinity relationship between Pods and a service mutual exclusion relationship between Pods.

From the aspect of the service affinity relationship, after a Pod in an initial Pod sequence is outputted, it is determined according to service association configuration information whether the Pod has an affinity Pod. If not, the process proceeds; otherwise, the affinity Pod is adjusted to a head position of the initial Pod sequence, for output in a next period.

From the aspect of the service mutual exclusion, Pods and mutually exclusive Pods remain in the original order.

Processing in the pre-filter stage is performed mainly from the aspects of the service affinity relationship between Pods and the service mutual exclusion relationship between Pods.

From the aspect of the service affinity relationship, when a Pod enters the pre-filter stage, it is determined according to the service association configuration information whether there is an affinity Pod. If not, the process proceeds. Otherwise, a next scheduling period is directly entered. All affinity Pods are incorporated into the pre-filter stage, and combined into a transition Pod. The transition Pod has a special prefix name to facilitate processing of the transition Pod in subsequent steps.

From the aspect of the service mutual exclusion relationship, when a Pod enters the pre-filter stage, it is determined according to the service association configuration information whether there is a mutually exclusive Pod. If not, the process proceeds. Otherwise, it is checked whether a mutually exclusive Pod has been deployed in a node in a pre-configured candidate node list, and if a mutually exclusive Pod has been deployed at a node in the candidate node list, the node is deleted from the candidate node list.

Processing in the post-scoring stage is performed mainly from the aspects of the service affinity relationship between Pods and the service mutual exclusion relationship between Pods.

From the aspect of the service affinity relationship, when a Pod enters the post-scoring stage, it is determined whether the Pod is a combined affinity Pod depending on whether a name of the Pod includes the above special prefix. If yes, nodes of the Pods which are combined into the combined affinity Pod are labeled as current nodes, and information of the combined affinity Pod is deleted.

From the aspect of the service mutual exclusion relationship, the original logic remains unchanged.

The sorting, pre-filter, and post-scoring stages are injected into Kubernetes as service schedulers respectively, i.e., the scheduling of Pods can be implemented according to the service affinity relationship between Pods and the service mutual exclusion relationship between Pods without modifying service blueprints of the Pods. As such, the complexity of the service blueprints of the Pods is reduced. In addition, subsequently the service affinity relationship or the service mutual exclusion relationship may be modified by adjusting the service schedulers, without needing to modify the service blueprints of the Pods. This is also implementable in large-scale application scenarios, because the adjustment of the service schedulers will not bring a wider impact as the scale expands, and all adjustments are limited to the scope of the service schedulers.

A service scheduling method, an electronic device, and a computer-readable storage medium provided in the present disclosure will be described below.

The present disclosure provides a service scheduling method, an electronic device, and a computer-readable storage medium. In an embodiment, the service scheduling method includes: performing screening processing on a first Pod sequence to obtain a second Pod sequence when service association configuration information is acquired, where the screening processing includes: traversing Pods in the first Pod sequence, and for each Pod in the first Pod sequence, when determining according to affinity configuration information in the service association configuration information that all affinity Pods corresponding to the Pod are present in the first Pod sequence, combining the Pod and all the affinity Pods to obtain a transition Pod, where the affinity configuration information is used for representing a service binding relationship between different Pods in the first Pod sequence, and the affinity Pods are the Pods having a service binding relationship with the Pod; performing node deployment for a target Pod in the second Pod sequence, where the node deployment includes: when determining that the target Pod is the transition Pod, deploying all the Pods, which are combined to obtain the target Pod, at the same target node, where the target Pod is the Pod to be deployed in the second Pod sequence. In this embodiment, screening processing is performed on the first Pod sequence to obtain the second Pod sequence, i.e., it is determined according to the affinity configuration information in the service association configuration information that all affinity Pods corresponding to the Pod are present in the first Pod sequence, and the Pod and all the affinity Pods are combined to obtain a transition Pod, so as to obtain the second Pod sequence. In the process of performing node deployment for the target Pod in the second Pod sequence, because the Pod and all the affinity Pods are combined to form the transition Pod, all the Pods which are combined to obtain the target Pod are deployed at the same target node when the target Pod is the transition Pod. In this way, the Pod can be deployed at the node without modifying the service blueprints of the Pods, i.e., without increasing the complexity of the service blueprints of the Pods. Therefore, in the embodiments of the present disclosure, Pod service scheduling can be realized without modifying the service blueprints of the Pods.

The embodiments of the present disclosure will be described in detail below in conjunction with the accompanying drawings.

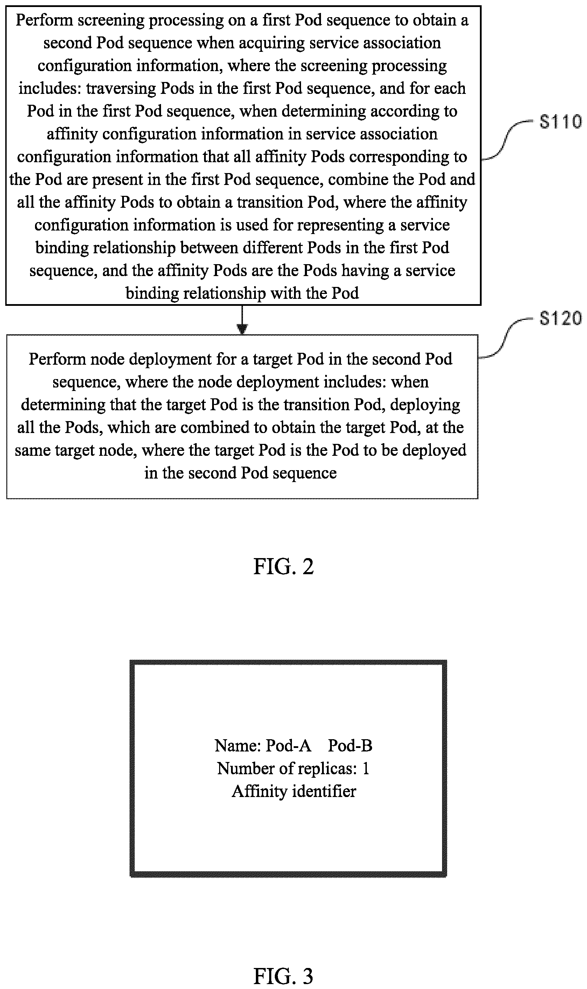

FIG. 2 is a flowchart of a service scheduling method according to an embodiment of the present disclosure, which may include, but not limited to, the following steps S110 and S120.

At S110, screening processing is performed on a first Pod sequence to obtain a second Pod sequence when service association configuration information is acquired.

The screening processing includes: traversing Pods in the first Pod sequence, and for each Pod in the first Pod sequence, when determining according to affinity configuration information in the service association configuration information that all affinity Pods corresponding to the Pod are present in the first Pod sequence, combining the Pod and all the affinity Pods to obtain a transition Pod. The affinity configuration information is used for representing a service binding relationship between different Pods in the first Pod sequence, and the affinity Pods are the Pods having a service binding relationship with the Pod.

In this step, screening processing is performed on the first Pod sequence to obtain the second Pod sequence, such that node deployment can be performed for the target Pod based on the second Pod sequence in subsequent steps. All the Pods in the second Pod sequence which are combined to obtain the transition Pod are deployed at the same target node. In other words, each Pod in the first Pod sequence may have a corresponding affinity Pod. Therefore, the first Pod sequence is traversed, and it is determined according to the affinity configuration information in the service association configuration information whether an affinity Pod corresponding to the Pod is present in the first Pod sequence. When it is determined that all affinity Pods corresponding to the Pod are present in the first Pod sequence, the Pod and all the affinity Pods are combined to obtain a transition Pod, such that the Pod and all the affinity Pods corresponding to the Pod can be deployed at the same target node as one target Pod.

It should be understood that the method of acquiring the service association configuration information is not limited. For example, a configuration file including the service association configuration information is imported into Kubernetes through a client, and the configuration file uploaded by the client is read to acquire the service association configuration information in the configuration file. For another example, a configuration file including the service association configuration information is pre-configured on Kubernetes, and the configuration file pre-configured on Kubernetes is directly read to acquire the service association configuration information. The client may be, but not limited to, a User Equipment (UE), a subscriber unit, a subscriber station, a mobile site, a mobile station, a remote station, a remote terminal device, a mobile device, a user terminal device, a wireless communication device, a user agent, or a user device, etc. The client may be embodied in different forms in specific application scenarios, i.e., the client may vary with different application scenarios.

It should be noted that the service association configuration information of the configuration file may be modified according to a service requirement, and when the service binding relationship between Pods changes, the affinity configuration information in the service association configuration information is modified correspondingly. In this way, there is no need to modify the service blueprints of the Pods, and risks caused by modifying the service binding relationship between the Pods are reduced. Therefore, the service scheduling method is implementable in large-scale application scenarios.

In an embodiment, the content of the affinity configuration information in the service association configuration information is not limited. For example, the affinity configuration information includes Pod names having a service affinity relationship and an affinity identifier. As shown in FIG. 3, the affinity configuration information includes two Pod names, namely, Pod-A and Pod-B, and an affinity identifier. The affinity configuration information represents that a Pod whose name includes Pod-A and a Pod whose name includes Pod-B have a service binding relationship.

In an embodiment, the content of the affinity configuration information in the service association configuration information is not limited. As shown in FIG. 3, the affinity configuration information may further include a number of replicas N, and represents that the Pod has a service binding relationship with N replicas of the affinity Pod, where N is a positive integer greater than 1. The value of N may be set by those having ordinary skills in the art according to specific service requirements, which is not limited herein. For example, if N is set to 1, the affinity configuration information represents that a Pod has a service binding relationship with only one replica of the affinity Pod, and if there are other replicas of the affinity Pod, the Pod does not have a service binding relationship with the other replicas of the affinity Pod.

In an embodiment, the method for traversing the first Pod sequence is not limited, and the first Pod sequence may be traversed from head to tail, from tail to head, or using other rules.

In an embodiment, a method for combining the Pod and all the affinity Pods to obtain the transition Pod includes: combining specification information of the Pod and all the affinity Pods to obtain the transition Pod with larger specification information.

At S120, node deployment is performed for a target Pod in the second Pod sequence.

The node deployment includes: when determining that the target Pod is the transition Pod, deploying all the Pods, which are combined to obtain the target Pod, at the same target node, where the target Pod is the Pod to be deployed in the second Pod sequence.

In this step, screening processing is performed on the first Pod sequence to obtain the second Pod sequence, i.e., it is determined according to the affinity configuration information in the service association configuration information that all affinity Pods corresponding to the Pod are present in the first Pod sequence, and the Pod and all the affinity Pods are combined to obtain a transition Pod, so as to obtain the second Pod sequence. In the process of performing node deployment for the target Pod in the second Pod sequence, because the Pod and all the affinity Pods are combined to form the transition Pod, all the Pods which are combined to obtain the target Pod are deployed at the same target node when the target Pod is the transition Pod. In this way, the Pod can be deployed at the node without modifying the service blueprints of the Pods, i.e., without increasing the complexity of the service blueprints of the Pods. In addition, the Pods having the service binding relationship can be deployed at the same node to meet the requirements of Pod service binding. Therefore, in the embodiments of the present disclosure, Pod service scheduling can be realized without modifying the service blueprints of the Pods.

It can be understood that when a plurality of Pods having a service binding relationship need to be run, because all the Pods having the service binding relationship are deployed at the same node, the Pods can be run on the node without occupying a plurality of nodes at the same time, so that the resource utilization rate of the node is improved.

In an embodiment, the method for determining the target Pod from the second Pod sequence is not limited. For example, the Pods may be sequentially outputted as the target Pod according to the order of the Pods in the second Pod sequence, or the Pods may be outputted as the target Pod in a descending order of priorities of the Pods in the second Pod sequence.

In an embodiment, the method for selecting the target node from the pre-configured candidate node list is not limited. For example, the nodes satisfying a target Pod resource requirement are selected as candidate nodes from the candidate node list by using a Predicates algorithm, then the candidate nodes are scored by using a Priorities algorithm according to resource statuses of the candidate nodes, and the candidate node with the highest score is selected as the target node.

In an embodiment of the present disclosure, the service association configuration information further includes mutual exclusion configuration information for representing a mutual exclusion service relationship between different Pods in the second Pod sequence, and "performing node deployment for a target Pod in the second Pod sequence" in S120 includes, but not limited to, a following step S121.

At S121, when determining according to the mutual exclusion configuration information that a plurality of mutually exclusive Pods corresponding to the target Pod are present in the second Pod sequence, the target Pod and the plurality of mutually exclusive Pods are deployed at different target nodes, where the mutually exclusive Pods are the Pods having a mutual exclusion service relationship with the Pod.

In this step, because a mutually exclusive Pod corresponding to the target Pod may be present in the second Pod sequence, it is determined according to the mutual exclusion configuration information in the service association configuration information whether a mutually exclusive Pod corresponding to the target Pod is present in the second Pod sequence. When it is determined that one or more mutually exclusive Pods corresponding to the target Pod are present in the second Pod sequence, the target Pod and the one or more exclusive Pods are deployed at different target nodes, such that the Pods having the service mutual exclusion relationship are run at different nodes, thereby avoiding the risk of running errors of the Pods due to mutual exclusion services.

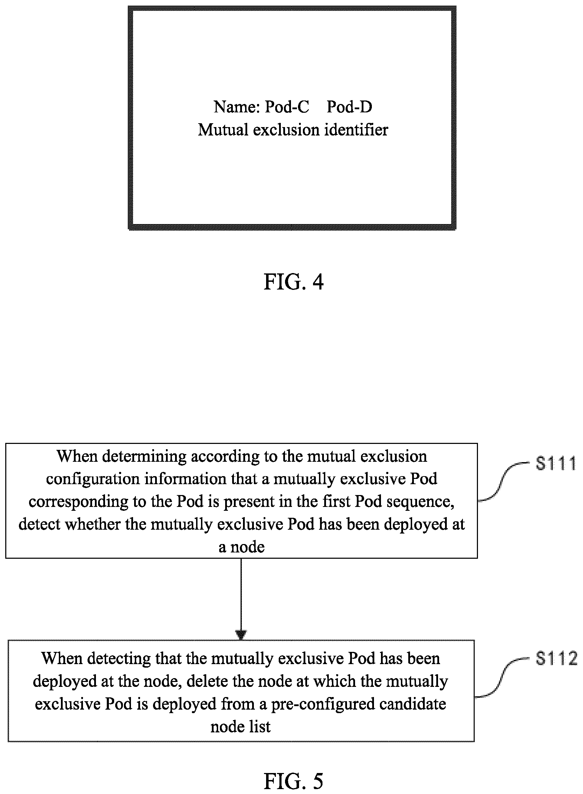

As shown in FIG. 5, in an embodiment of the present disclosure, the service association configuration information further includes mutual exclusion configuration information for representing a mutual exclusion service relationship between different Pods in the first Pod sequence, and "performing screening processing on a first Pod sequence to obtain a second Pod sequence" in S110 includes, but not limited to, the following steps S111 and S112.

At S111, when determining according to the mutual exclusion configuration information that a mutually exclusive Pod corresponding to the Pod is present in the first Pod sequence, it is detected whether the mutually exclusive Pod has been deployed at a node.

At S112, when detecting that the mutually exclusive Pod has been deployed at the node, the node at which the mutually exclusive Pod is deployed is deleted from a pre-configured candidate node list.

In this step, because a mutually exclusive Pod corresponding to the target Pod may be present in the first Pod sequence, it is determined according to the mutual exclusion configuration information in the service association configuration information whether a mutually exclusive Pod corresponding to the target Pod is present in the first Pod sequence. When it is determined that a mutually exclusive Pod corresponding to the target Pod is present in the second Pod sequence, it is detected whether the mutually exclusive Pod has been deployed at a node. When it is detected that the mutually exclusive Pod has been deployed at the node, the node at which the mutually exclusive Pod is deployed is deleted from the pre-configured candidate node list. In this way, in the subsequent step of performing node deployment for the target Pod in the second Pod sequence, the node at which the mutually exclusive Pod is deployed will not be selected from the candidate node list as the target node, thereby avoiding the deployment of Pods having a service mutual exclusion relationship at the same node.

In an embodiment, the content of the mutual exclusion configuration information in the service association configuration information is not limited. For example, the mutual exclusion configuration information includes Pod names having a service mutual exclusion relationship and a mutually exclusive identifier. As shown in FIG. 4, the mutual exclusion configuration information includes two Pod names, namely, Pod-C and Pod-D, and a mutual exclusion identifier. The mutual exclusion configuration information represents that a Pod whose name includes Pod-C and a Pod whose name includes Pod-D have a service mutual exclusion relationship.

In an embodiment, whether the mutually exclusive Pod has been deployed at a node may be detected in various manners. For example, each node in the candidate node list is traversed, and Pods deployed in each node are detected. If the Pods deployed include the mutually exclusive Pod, it is determined that the mutually exclusive Pod has been deployed at a node.

In an embodiment of the present disclosure, before "performing screening processing on a first Pod sequence to obtain a second Pod sequence" in S120, the method further includes, but not limited to, a following step S130.

At S130, all Pods in an initial Pod set are sorted to obtain the first Pod sequence.

In this step, the initial Pod set includes a plurality of Pods, and the plurality of Pods are in an unordered state in the initial Pod set. The plurality of Pods are sorted to obtain the first Pod sequence, such that in the process of performing screening processing on the first Pod sequence to obtain the second Pod sequence in subsequent steps, the Pods in the first Pod sequence can be traversed sequentially. In this way, no Pod in the first Pod sequence will be skipped during traversal or repeatedly traversed, and the processing efficiency is improved.

In an embodiment, the sorting of all the Pods in the initial Pod set to obtain the first Pod sequence may be implemented in various manners. For example, all the Pods in the initial Pod set are randomly sorted to obtain the first Pod sequence, or are sorted according to priorities of the Pods to obtain the first Pod sequence.

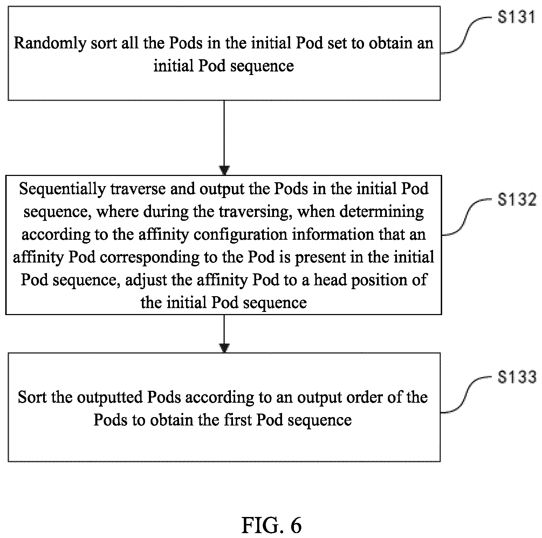

As shown in FIG. 6, in an embodiment of the present disclosure, "sorting all Pods in an initial Pod set to obtain the first Pod sequence" in S130 includes, but not limited to, the following steps S131, S132, and S133.

At S131, all the Pods in the initial Pod set are randomly sorted to obtain an initial Pod sequence.

At S132, the Pods in the initial Pod sequence are sequentially traversed and outputted, where during the traversing, when determining according to the affinity configuration information that an affinity Pod corresponding to the Pod is present in the initial Pod sequence, adjusting the affinity Pod to a head position of the initial Pod sequence.

At S133, the outputted Pods are sorted according to an output order of the Pods to obtain the first Pod sequence.

In this step, all the Pods in the initial Pod set are randomly sorted to obtain the initial Pod sequence, such that the Pods in the initial Pod sequence can be sequentially traversed and outputted. During the traversal process, it is determined according to the affinity configuration information whether an affinity Pod corresponding to the Pod is present in the initial Pod sequence. When it is determined that an affinity Pod corresponding to the Pod is present in the initial Pod sequence, the affinity Pod is adjusted to the head position of the initial Pod sequence, such that the Pod and the affinity Pod are at adjacent positions in the initial Pod sequence and can be outputted sequentially. The outputted Pods are sorted according to the output order of the Pods to obtain the first Pod sequence. Therefore, the Pod and the affinity Pod are at adjacent positions in the first Pod sequence, such that in the process of traversing each Pod in the first Pod sequence in the subsequent step of performing screening processing on the first Pod sequence, it can be quickly determined according to the affinity configuration information that all the affinity Pods corresponding to the Pod are present in the first Pod sequence, thereby improving the efficiency of screening processing.

In an embodiment of the present disclosure, "sorting all Pods in an initial Pod set to obtain the first Pod sequence" in S130 further includes, but not limited to, a following step S134.

At S134, when determining according to the affinity configuration information that a part of the affinity Pods corresponding to the Pod are present in the first Pod sequence, the initial Pod sequence is controlled to output the remaining affinity Pods corresponding to the Pod to the first Pod sequence.

In this step, it is determined according to the affinity configuration information whether all the affinity Pods corresponding to the Pod are present in the first Pod sequence. When only a part of the affinity Pods corresponding to the Pod are present in the first Pod sequence and the remaining affinity Pods corresponding to the Pod are present in the initial Pod sequence, the initial Pod sequence is controlled to output the remaining affinity Pods corresponding to the Pod to the first Pod sequence, such that all the affinity Pods corresponding to the Pod are present in the first Pod sequence. In this way, in the subsequent step of performing screening processing on the first Pod sequence, the Pod and all the affinity Pods are combined to form the transition Pod, and no affinity Pod will be missing.

In an embodiment of the present disclosure, after "combining the Pod and all the affinity Pods to obtain a transition Pod" in S110, the method further includes, but not limited to, a following step S140.

At S140, the first Pod sequence is emptied.

In this step, because screening processing has been performed on the first Pod sequence to obtain the second Pod sequence in the previous step, the target Pod in the second Pod sequence is deployed, and the first Pod sequence is no longer used, so the buffer space can be released by emptying the first Pod sequence.

In an embodiment of the present disclosure, after "combining the Pod and all the affinity Pods to obtain a transition Pod" in S110, the method further includes, but not limited to, a following step S150.

At S150, feature processing is performed on the transition Pod to obtain the transition Pod carrying a target identifier.

In this step, feature processing is performed on the transition Pod to cause the transition Pod to carry the target identifier. The target identifier is used to distinguish the transition Pod from a Pod that has not been combined. In this way, it can be determined in subsequent steps whether the target Pod is the transition Pod by detecting whether the target Pod carries the target identifier.

In an embodiment, the method for performing feature processing on the transition Pod is not limited. For example, a special prefix union-Pod may be added as the target identifier to a name of the transition Pod. In this way, the name of the transition Pod carries the special prefix union-Pod that is not included in names of other Pods, so the transition Pod can be distinguished from other Pods.

In an embodiment of the present disclosure, "determining that the target Pod is the transition Pod" in S110 further includes, but not limited to, a following step S160.

At S160, it is determined that the target Pod is the transition Pod when determining that the target Pod carries the target identifier.

In this step, it is detected whether the target Pod is the transition Pod by detecting whether the target Pod carries the target identifier, and when it is detected that the target Pod carries the target identifier, it is determined that the target Pod is the transition Pod.

In an embodiment, the method for detecting the target identifier varies with the method for performing feature processing on the transition Pod. For example, when the special prefix union-Pod is added as the target identifier to the name of the transition Pod, the method for detecting the target identifier includes detecting whether the name of the target Pod carries the special prefix union-Pod, and if yes, determining that the target Pod is the transition Pod.

Examples are given below to illustrate the operating principles and procedures of the above embodiments,

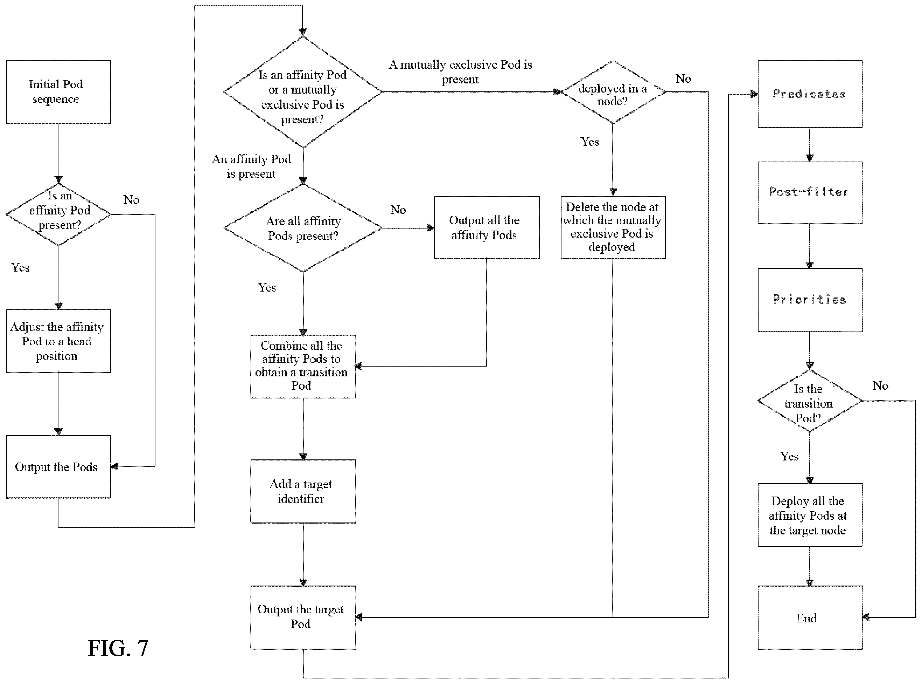

FIG. 7 is an execution flowchart of a service scheduling method according to an embodiment of the present disclosure.

Referring to FIG. 7, a service scheduling system is designed for deploying a Pod at a node. Based on this, the service scheduling method provided in the embodiments of the present disclosure is executed.

At step 1, all Pods in an initial Pod set are randomly sorted to obtain an initial Pod sequence, and the Pods in the initial Pod sequence are sequentially traversed. During the traversal process, it is determined:
whether an affinity Pod corresponding to the Pod is present in the initial Pod sequence.

If yes, step 2 is executed; otherwise, step 3 is executed.

At step 2, the affinity Pod is adjusted to a head position of the initial Pod sequence.

At step 3, the Pods in the initial Pod sequence are sequentially outputted, and the outputted Pods are sorted according to an output order of the Pods to obtain a first Pod sequence.

At step 4, the Pods are sequentially outputted from the first Pod sequence, and it is determined according to the service association configuration information:
1) whether an affinity Pod corresponding to the Pod is present; and
2) whether a mutually exclusive Pod corresponding to the Pod is present.

If an affinity Pod corresponding to the Pod is present, step 5 is executed.

If a mutually exclusive Pod corresponding to the Pod is present, step 9 is executed.

At step 5, it is determined according to the affinity configuration information:
whether all affinity Pods corresponding to the Pod are present in the first Pod sequence.

If yes, step 7 is executed; otherwise, step 6 is executed.

At step 6, the initial Pod sequence is controlled to output the remaining affinity Pods corresponding to the Pod to the first Pod sequence.

At step 7, the Pod and all the affinity Pods are combined to obtain a transition Pod, the first Pod sequence is emptied, and a second Pod sequence is obtained.

At step 8, feature processing is performed on the transition Pod of the second Pod sequence to obtain the transition Pod carrying a target identifier, and step 10 is executed.

At step 9, it is determined whether the mutually exclusive Pod has been deployed at a node.

If yes, the node at which the mutually exclusive Pod is deployed is deleted from a pre-configured candidate node list.

At step 10, the target Pod is outputted from the second Pod sequence.

At step 11, the nodes satisfying a target Pod resource requirement are selected as candidate nodes from the candidate node list by using a Predicates algorithm.

At step 12, related information of the candidate node list is updated through a post-filter, where the post-filter is an extension point of a notification type, a parameter for calling the extension is the candidate node list processed by a Predicates algorithm, and the information may be used in the extension to update an internal status or generate log or metrics information.

At step 13, the candidate nodes are scored by using a Priorities algorithm, and the candidate node with the highest score is selected as the target node.

At step 14, it is detected whether the target Pod is the transition Pod by detecting whether the target Pod carries the target identifier.

If yes, all the Pods which are combined to obtain the target Pod are deployed at the target node.

It can be seen that screening processing is performed on the first Pod sequence to obtain the second Pod sequence, i.e., it is determined according to the affinity configuration information in the service association configuration information that all affinity Pods corresponding to the Pod are present in the first Pod sequence, and the Pod and all the affinity Pods are combined to obtain a transition Pod, so as to obtain the second Pod sequence. In the process of performing node deployment for the target Pod in the second Pod sequence, because the Pod and all the affinity Pods are combined to form the transition Pod, all the Pods which are combined to obtain the target Pod are deployed at the same target node when the target Pod is the transition Pod. In this way, the Pod can be deployed at the node without modifying the service blueprints of the Pods, i.e., without increasing the complexity of the service blueprints of the Pods. Therefore, in the embodiments of the present disclosure, Pod service scheduling can be realized without modifying the service blueprints of the Pods.

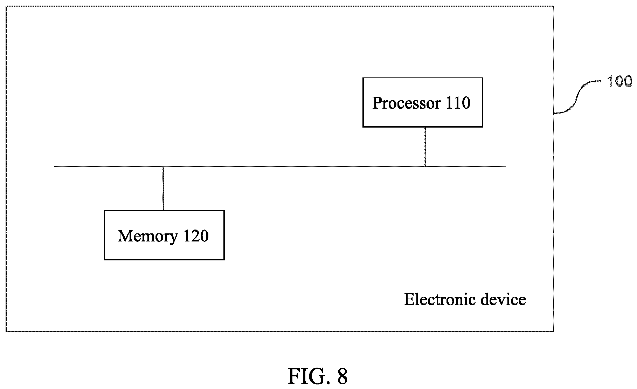

In addition, as shown in FIG. 8, an embodiment of the present disclosure discloses an electronic device 100, including: at least one processor 110; and at least one memory 120, configured for storing at least one program. The at least one program, when executed by the at least one processor 110, causes the at least one processor 110 to implement the service scheduling method according to any one of the above embodiments.

In addition, an embodiment of the present disclosure discloses a computer-readable storage medium, storing a computer-executable instruction which, when executed by a processor, causes the processor to implement the service scheduling method according to any one of the above embodiments.

In addition, an embodiment of the present disclosure provides a computer program product, including a computer program or a computer instruction stored in a computer-readable storage medium which, when read from the computer-readable storage medium and executed by a processor of a computer device, causes the computer device to implement the service scheduling method according to any one of the above embodiments.

In the embodiments of the present disclosure, screening processing is performed on the first Pod sequence to obtain the second Pod sequence, i.e., it is determined according to the affinity configuration information in the service association configuration information that all affinity Pods corresponding to the Pod are present in the first Pod sequence, and the Pod and all the affinity Pods are combined to obtain a transition Pod, so as to obtain the second Pod sequence. In the process of performing node deployment for the target Pod in the second Pod sequence, because the Pod and all the affinity Pods are combined to form the transition Pod, all the Pods which are combined to obtain the target Pod are deployed at the same target node when the target Pod is the transition Pod. In this way, the Pod can be deployed at the node without modifying the service blueprints of the Pods, i.e., without increasing the complexity of the service blueprints of the Pods. Therefore, in the embodiments of the present disclosure, Pod service scheduling can be realized without modifying the service blueprints of the Pods, thereby reducing the complexity of service blueprints and the risks of modifying the service blueprints.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A service scheduling method, comprising:
performing screening processing on a first Pod sequence to obtain a second Pod sequence, in response to acquiring service association configuration information,
wherein the screening processing comprises: traversing Pods in the first Pod sequence, and for each Pod in the first Pod sequence, in response to determining according to affinity configuration information in the service association configuration information that all affinity Pods corresponding to the Pod are present in the first Pod sequence, combining the Pod and all the affinity Pods to obtain a transition Pod, wherein the affinity configuration information is used for representing a service binding relationship between different Pods in the first Pod sequence, and the affinity Pods are the Pods having a service binding relationship with the Pod;
performing node deployment for a target Pod in the second Pod sequence,
wherein the node deployment comprises: in response to determining that the target Pod is the transition Pod, deploying all the Pods, which are combined to obtain the target Pod, at the same target node, wherein the target Pod is the Pod to be deployed in the second Pod sequence.

2. The service scheduling method of claim 1, wherein the service association configuration information further comprises mutual exclusion configuration information for representing a mutual exclusion service relationship between different Pods in the second Pod sequence, and performing node deployment for a target Pod in the second Pod sequence further comprises:
in response to determining according to the mutual exclusion configuration information that a plurality of mutually exclusive Pods corresponding to the target Pod are present in the second Pod sequence, deploying the target Pod and the plurality of mutually exclusive Pods at different target nodes, wherein the mutually exclusive Pods are the Pods having a mutual exclusion service relationship with the Pod.

3. The service scheduling method of claim 1, wherein the service association configuration information further comprises mutual exclusion configuration information for representing a mutual exclusion service relationship between different Pods in the first Pod sequence, and performing screening processing on a first Pod sequence to obtain a second Pod sequence further comprises:
in response to determining according to the mutual exclusion configuration information that a mutually exclusive Pod corresponding to the Pod is present in the first Pod sequence, detecting whether the mutually exclusive Pod has been deployed at a node; and
in response to detecting that the mutually exclusive Pod has been deployed at the node, deleting the node at which the mutually exclusive Pod is deployed from a pre-configured candidate node list.

4. The service scheduling method of claim 1, wherein before performing screening processing on a first Pod sequence to obtain a second Pod sequence, the method further comprises:
sorting all Pods in an initial Pod set to obtain the first Pod sequence.

5. The service scheduling method of claim 4, wherein sorting all Pods in an initial Pod set to obtain the first Pod sequence comprises:
randomly sorting all the Pods in the initial Pod set to obtain an initial Pod sequence;
sequentially traversing and outputting the Pods in the initial Pod sequence, wherein during the traversing, in response to determining according to the affinity configuration information that an affinity Pod corresponding to the Pod is present in the initial Pod sequence, adjusting the affinity Pod to a head position of the initial Pod sequence; and
sorting the outputted Pods according to an output order of the Pods to obtain the first Pod sequence.

6. The service scheduling method of claim 5, further comprising:
in response to determining according to the affinity configuration information that a part of the affinity Pods corresponding to the Pod are present in the first Pod sequence, controlling the initial Pod sequence to output remaining affinity Pods corresponding to the Pod to the first Pod sequence.

7. The service scheduling method of claim 5, wherein after combining the Pod and all the affinity Pods to obtain a transition Pod, the method further comprises: emptying the first Pod sequence.

8. The service scheduling method of claim 1, wherein after combining the Pod and all the affinity Pods to obtain a transition Pod, the method further comprises:
performing feature processing on the transition Pod to obtain the transition Pod carrying a target identifier.

9. The service scheduling method of claim 8, wherein determining that the target Pod is the transition Pod comprises: determining that the target Pod is the transition Pod in response to determining that the target Pod carries the target identifier.

10. An electronic device, comprising:
at least one processor; and
at least one memory, configured for storing at least one program,
wherein the at least one program, when executed by the at least one processor, causes the at least one processor to perform the service scheduling method of any one of claims 1 to 9.

11. A computer-readable storage medium, storing a processor-executable program which, when executed by a processor, causes the processor to perform the service scheduling method of any one of claims 1 to 9.
